# EUROPEAN PATENT SPECIFICATION

(11) **EP 0 438 142 B1**
(45) Date of publication and mention of the grant of the patent: **03.04.1996**
(21) Application number: 91100467.9
(22) Date of filing: 16.01.1991
(51) Int. Cl.: H04N 1/32

(54) **Method of controlling transmission of facsimile**
Verfahren zur Steuerung von Faksimileübertragungen
Procédé pour la commande de transmission fac-similé

(30) Priority: 16.01.1990 JP 6693/90
(43) Date of publication of application: 24.07.1991
(73) Proprietor: SHARP KABUSHIKI KAISHA, Osaka 545 (JP)
(72) Inventor: Nakajiri, Takashi, Nara-shi, Nara-ken (JP); Itado, Masaharu, Nara-shi, Nara-ken (JP); Okuyama, Makoto, Nara-shi, Nara-ken (JP)
(74) Representative: TER MEER - MÜLLER - STEINMEISTER & PARTNER

(56) References cited:
- US-A- 4 274 114
- US-A- 4 353 097
- HITACHI REVIEW. vol. 38, no. 6, December 1989, TOKYO, JP pages 315 - 318; K. TAKAOKA ET AL.: 'VLSI modem for G3/G2 facsimile'

## Description

### BACKGROUND OF THE INVENTION

### 1. Field of the Invention

The present invention relates to a method of controlling transmission for identifying whether a facsimile message or a control signal is received in a facsimile reception mode.

### 2. Description of the Related Art

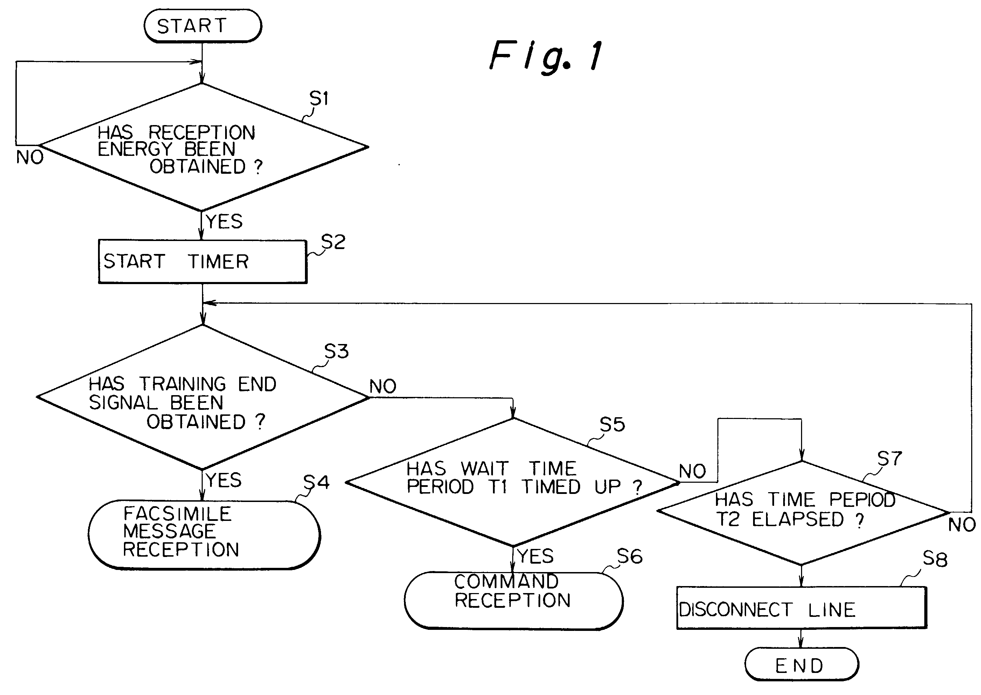

In a facsimile reception mode, it is essential to conduct a facsimile message reception and a control signal reception, for example a command reception, in accordance with the CCITT recommendations. Thus, in a facsimile the inventors know, an identifying process for identifying whether a message reception or a command reception occurs is executed in accordance with a flow chart shown in Fig. 1.

First, in the reception mode, it is determined whether reception energy is obtained (at step S1). When the reception energy has been obtained, a timer is started up (at step S2). Thereafter, it is determined whether or not a training end signal is obtained in a high speed modem section in a particular time period, for example in 300 ms, after the timer was started up (at step S3). When the training signal has been obtained, it is determined that the facsimile enters into a facsimile message reception mode to receive a facsimile message (at step S4).

In contrast, when the training end signal was not obtained in the aforementioned time period, the program proceeds to step S5. At step S5, it is determined whether or not a particular wait time period T1 times up. When the particular wait time period T1 times up, the facsimile starts receiving a command (at step S6)

When the particular wait time period T1 has not timed up, the program proceeds to step S7. At step S7, it is determined whether or not a time period T2 elapses. When the time period T2 elapsed, the facsimile disconnects a communication line (at step S8). When the time period T2 has not elapsed, the aforementioned processes after step S3 are repeatedly executed.

As was described above, the facsimile monitors the training end signal in the high speed modem so as to identify a high speed signal and a command signal in the following manner. When the high speed training is completed in the particular time period, the facsimile receives a facsimile message. In contrast, when the high speed training is not completed in the particular time period, the facsimile receives a command.

In such a facsimile, when the high speed training is not completed in a time period of 300 ms after the reception energy was obtained, external disturbance such as a white noise, impulse noise, or gain hit noise are applied to the facsimile from the communication line, causing mistakenly to determine that the facsimile enters into the command reception mode to execute the command receiving process. In this case, the facsimile cannot enter into the facsimile message reception mode.

The article "VLSI modem for G3/G2 facsimile" of K. TAKAOKA et al. published in December 1989 in HITACHI REVIEW discloses a facsimile device able to work in two modes: high-speed (G3) and medium/low-speed (G2). The facsimile is able to receive both frequency-shift-keying signals and high-speed message signals in the "high-speed" transmission mode as well as both procedural tonal procedural signals and message signals in the "medium/low-speed" transmission mode.

US - A - 4 274 114 discloses a facsimile in which picture information of a plurality of documents is transmitted successively in the same transmitting mode by omitting the command signals.

### SUMMARY OF THE INVENTION

It is therefore an object of the present invention to provide a method of controlling transmission of facsimile for precisely identifying the reception of a control signal free from external disturbance so as to stably execute a control signal receiving process or facsimile message receiving process.

According to the present invention, the aforementioned object is accomplished by a method of controlling transmission of a facsimile as set out in claim 1.

A tonal signal detecting section in a modem section of the facsimile monitors the tonal signal on the lower side of a carrier signal (1650 Hz tonal signal) in a preamble signal at the beginning of a 300 BPS command reception signal. When the tonal signal is detected, the tonal signal detecting section identifies that the received signal is a control signal. Thus, the detecting section clearly identifies which of a control signal and a facsimile signal is received.

Since the identification of a control signal is securely and rapidly conducted, the facsimile can precisely identify a control signal free from external disturbance and stably executes a control signal receiving process or facsimile message receiving process. Moreover, the identifying process can be inexpensively and readily accomplished by a filtering process in the tonal signal detecting section.

Further objects and advantages of the present invention will be apparent from the following description of the preferred embodiments of the invention as illustrated in the accompanying drawings.

### BRIEF DESCRIPTION OF DRAWINGS

Fig. 1 shows a flow of a method of identifying command reception in a facsimile the present inventors know;
Fig. 2 schematically shows an electrical construction of a facsimile as a preferred embodiment according to the present invention;
Fig. 3 shows a modem section of the facsimile of Fig. 2;
Fig. 4 shows relationship between 300 BPS preamble signal and 1650 Hz filter output; and
Fig. 5 shows a flow of a signal identifying control procedure of the facsimile of Fig. 2.

### DESCRIPTION OF THE PREFERRED EMBODIMENTS

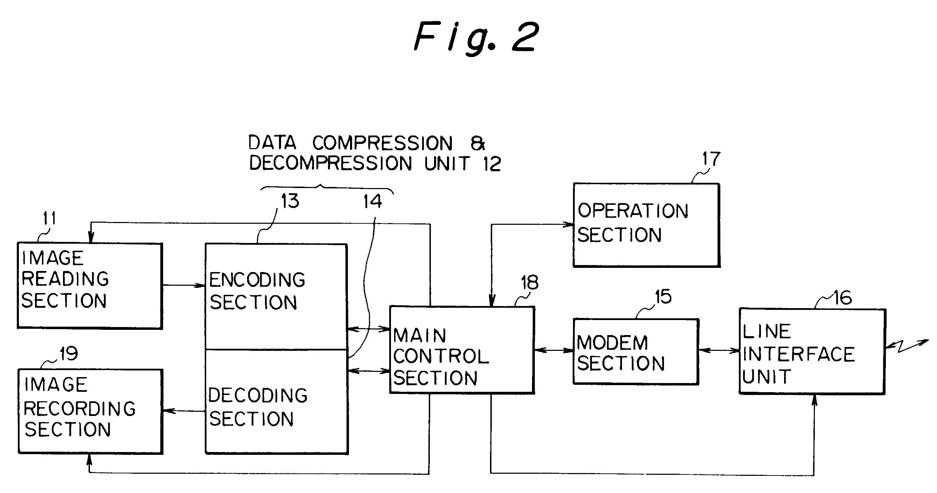

Fig. 2 schematically shows an electrical construction of a facsimile as a preferred embodiment of the present invention.

In the figure, reference numeral 11 denotes an image reading section for reading an original image such as a hard copy document and for obtaining image data. Reference numeral 12 denotes a data compression and decompression unit consisting of an encoding section 13 and a decoding section 14 for reducing redundancy of the image data by compression and for reproducing the image data by decompression.

Furthermore reference numeral 15 denotes a modem section for modulating the image data so as to transmit it through a telephone line or the like and demodulating received signal. The reference numeral 16 denotes a line interface unit for transmitting and receiving data. The reference numeral 17 denotes an operation section for commanding transmitting and receiving operations. The reference numeral 18 is a main control section for totally controlling various operations with respect to the image data such as reading, transmitting and receiving operations. The reference numeral 19 denotes an image recording section for storing the received and decoded image data.

The reading section 11 reads the image data on the document. The encoding section 13 compensates the distortion of the image data and compresses it. The resultant data are sent to the modem section 15 through the main control section 18. The modem section 15 determines automatic equalization and transmission rate of the training line in accordance with the program control by a modem interface section and a controller section. A command reception modem section and a high speed modem section in the modem 15 demodulate the image data and then send the resultant data to a line interface unit 16 through an analog section.

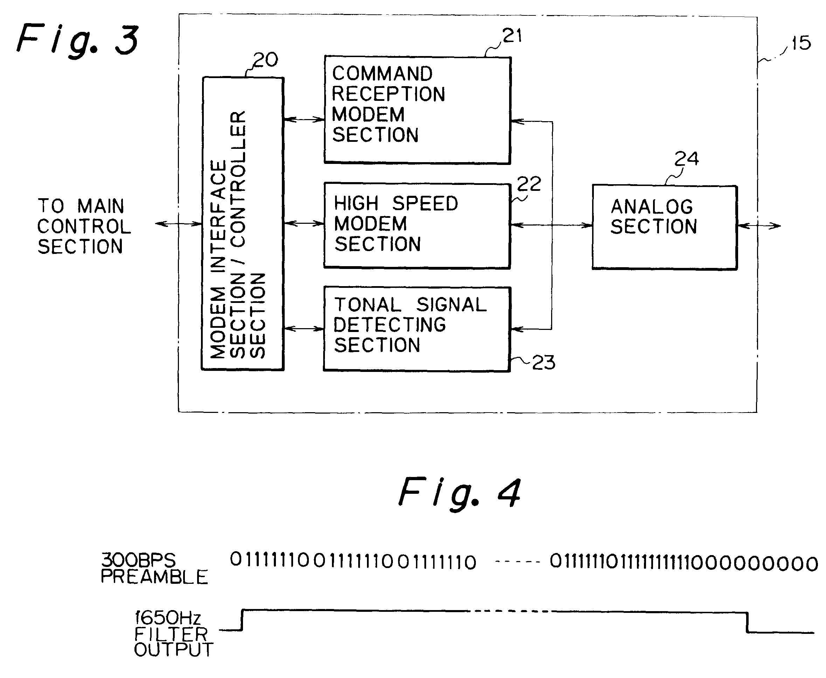

Fig. 3 shows internal structure of the modem section 15 of the embodiment of Fig. 2.

In the figure, reference numeral 20 denotes a modem interface section and a controller section for interfacing with the modem section 15, and for processing FSK signals of a 300 BPS command reception modem section 21 and of a high speed modem section 22 in 9600/7200/4800/2400 BPS communication modes.

In the figure, reference numeral 23 denotes a tonal signal detecting section, and 24 denotes an analog section. The tonal signal detecting section 23 monitors a tonal signal of the lower frequency of a carrier frequency filtered from a preamble (a pattern where "01111110" is continued for one second) signal which is at the beginning of a 300 BPS command signal as shown in Fig. 4. Namely, the section 23 monitors a single 1650 Hz tonal signal.

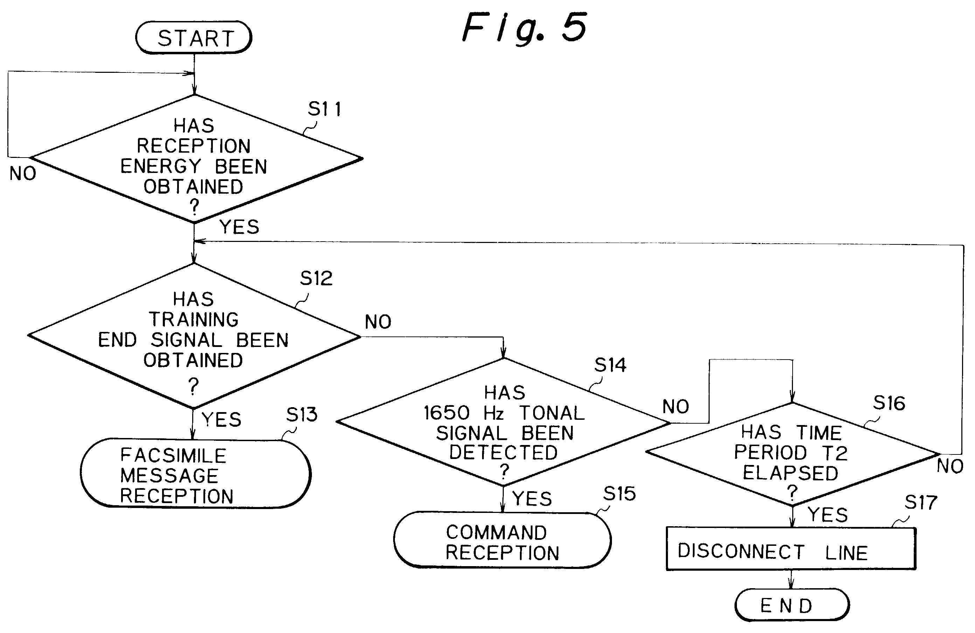

Fig. 5 shows a flow of the execution procedure of the method of identifying a command reception according to the embodiment.

With reference to Fig. 5, the method of identifying the command reception will be described in the following.

First, in the reception mode, it is determined whether or not reception energy has been obtained (at step S11). When the reception energy has been obtained, it is determined whether or not a training end signal has been obtained (at step S12).

When the training end signal has been obtained, the facsimile enters into a facsimile message reception mode (at step S13).

When the training end signal was not obtained at step S12, it is determined whether or not a 1650 Hz tonal signal is present in the 1650 Hz and 1850 Hz preamble signals contained in the 300 BPS FSK command reception signal (at step S14). When the 1650 Hz tonal signal is present, the program proceeds to step S15 and the facsimile enters into the command reception mode.

In contrast, when it was determined that the 1650 Hz tonal signal was absent at step S14, it is determined whether a time period T2 elapses after the process at step S11 is carried out (at step S16). When the time period T2 elapsed, the facsimile disconnects the communication line (at step S17). When the time period T2 has not elapsed, the processes after step S12 are repeatedly executed.

As was described above, by monitoring only the 1650 Hz single tonal signal, the identification of a facsimile message and a command can be rapidly executed at the same time. Moreover, according to the present embodiment, by means of only the tonal signal detecting section 23 for detecting a tonal signal, both the signals can be inexpensively and readily identified without providing another complicated circuit for monitoring a preamble pattern.

Many widely different embodiments of the present invention may be constructed without departing from the scope of the present invention. It should be understood that the present invention is not limited to the specific embodiments described in this specification, except as defined in the appended claims.

## Claims

1. A method of controlling the transmission of a facsimile in a facsimile device having a modem section (15) through which a control signal of frequency shift keying and a high speed facsimile message are transmitted, said method comprising the steps of:
determining (S12) whether a training end signal is detected within a given time interval after detecting (S11) reception energy;
determining (S14) whether a tonal signal of a predetermined frequency lower than a carrier frequency is detected; and
identifying (S15) that said reception energy is a control signal upon determining that the tonal signal of the predetermined frequency has been detected,
characterized in that said step (S14) of determining whether said tonal signal is detected is performed upon determining that the training end signal was not detected within said time interval, and that said tonal signal of the predetermined frequency is present in preamble signals at the beginning of a frequency shift keying command reception signal and obtained by filtering said preamble signals (Fig. 4) so as to substantially pass only said predetermined frequency.

2. The method as claimed in claim 1,
characterized in that said method further comprises the step (S13) of identifying that said reception energy is a facsimile message in the case that the training end signal has been obtained.

3. The method as claimed in claim 1,
characterized in that said method further comprises the step (S16) of determining whether a time period T2 has elapsed in the case that the tonal signal was not detected.

4. The method as claimed in claim 3,
characterized in that said method further comprises the step (S17) of disconnecting a communication line in the case that the time period T2 has elapsed after the reception energy was detected.

5. The method as claimed in claim 1,
characterized in that said step (S14) of determining whether said tonal signal is detected comprises the step of determining whether a tonal signal of 1650Hz is detected in the case that the training end signal was not detected.

## Patentansprüche

1. Verfahren zur Steuerung von Faksimileübertragungen in einem Faksimilegerät mit einem Modemabschnitt (15), mit dem ein frequenzumgetastetes Steuersignal und eine Hochgeschwindigkeits-Faksimilemeldung übertragen werden, wobei das Verfahren folgende Schritte aufweist:
- Ermitteln (S12), ob ein Trainingsendesignal innerhalb eines vorgegebenen Zeitintervalls enthalten wird, nachdem Empfangsenergie erhalten wurde (S11);
- Ermitteln (S14), ob ein Tonsignal mit einer vorgegebenen Frequenz, die niedriger als eine Trägerfrequenz ist, erhalten wird; und
- Erkennen (S15), daß die Empfangsenergie einem Steuersignal entspricht, wenn ermittelt wurde, daß ein Tonsignal mit der vorgegebenen Frequenz erhalten wurde;
**dadurch gekennzeichnet, daß** der Schritt (S14), bei dem ermittelt wird, ob das Tonsignal erhalten wird, ausgeführt wird, nachdem ermittelt wurde, daß das Trainingsendesignal nicht innerhalb des Zeitintervalls erhalten wurde und daß das Tonsignal mit der vorgegebenen Frequenz in Präambelsignalen zu Beginn eines frequenzumgetasteten Befehlsempfangssignals vorhanden ist, das durch solches Filtern der Präambelsignale (Fig. 4) erhalten wurde, daß im wesentlichen nur die vorgegebene Frequenz durchgelassen wird.

2. Verfahren nach Anspruch 1, **dadurch gekennzeichnet, daß** das Verfahren ferner einen Schritt (S13) zum Erkennen, daß die Empfangsenergie einer Faksimilemeldung entspricht, umfaßt, wenn das Trainingsendesignal erhalten wurde.

3. Verfahren nach Anspruch 1, **dadurch gekennzeichnet, daß** das Verfahren ferner einen Schritt (S16) zum Ermitteln, ob eine Zeitperiode T2 abgelaufen ist, umfaßt, wenn das Tonsignal nicht erkannt wurde.

4. Verfahren nach Anspruch 3, **dadurch gekennzeichnet, daß** das Verfahren ferner einen Schritt (S17) zum Abtrennen von einer Kommunikationsleitung umfaßt, wenn die Zeitperiode T2 nach dem Erhalt der Empfangsenergie abgelaufen ist.

5. Verfahren nach Anspruch 1, **dadurch gekennzeichnet, daß** der Schritt (S14) zum Ermitteln, ob das Tonsignal erhalten wird, einen Schritt zum Ermitteln ob ein Tonsignal von 1650 Hz erhalten wird, umfaßt, wenn das Trainingsendesignal nicht erkannt wurde.

## Revendications

1. Procédé de commande de transmission de télécopie dans un télécopieur ayant une partie modem (15) par l'intermédiaire duquel sont transmis un signal de commande de modulation par déplacement de fréquence et un message de télécopie à vitesse élevée, ledit procédé comportant les étapes de:
détermination (S12) de la détection d'un signal de fin d'égalisation dans un intervalle de temps donné après la détection (S11) d'énergie de réception;
détermination (S14) de la détection d'un signal tonal de fréquence prédéterminée inférieure à une fréquence porteuse; et
identification (S15) de ladite énergie de réception comme étant un signal de commande d'après la détermination de la détection du signal tonal de fréquence prédéterminée,
caractérisé en ce que ladite étape (S14) de détermination de la détection dudit signal tonal est effectuée d'après la détermination de la non détection du signal de fin d'égalisation dans ledit intervalle de temps et de la présence dudit signal tonal de fréquence prédéterminée dans des signaux de préambule au début d'un signal de réception d'instruction de modulation par déplacement de fréquence, obtenu par filtrage desdits signaux de préambule (Figure 4) de façon à ne laisser passer pratiquement que ladite fréquence prédéterminée.

2. Procédé tel que revendiqué dans la revendication 1,
caractérisé en ce que ledit procédé comporte en outre l'étape (S13) d'identification de ladite énergie de réception comme étant un message de télécopie dans le cas où le signal de fin d'égalisation a été reçu.

3. Procédé tel que revendiqué dans la revendication 1,
caractérisé en ce que ledit procédé comporte en outre l'étape (S16) de détermination de l'écoulement d'une durée T2 dans le cas où le signal tonal n'a pas été détecté.

4. Procédé tel que revendiqué dans la revendication 3,
caractérisé en ce que ledit procédé comporte en outre l'étape (S17) de déconnexion d'une ligne de communication dans le cas où la durée T2 s'est écoulée après la détection de l'énergie de réception.

5. Procédé tel que revendiqué dans la revendication 1,
caractérisé en ce que ladite étape (S14) de détermination de la détection dudit signal tonal comporte l'étape de détermination de la détection d'un signal tonal de 1 650 Hz dans le cas où le signal de fin d'égalisation n'a pas été détecté.
